# EUROPÄISCHE PATENTSCHRIFT

(11) **EP 0 586 330 B1**
(45) Veröffentlichungstag und Bekanntmachung des Hinweises auf die Patenterteilung: **26.08.1998**
(21) Anmeldenummer: 93810486.6
(22) Anmeldetag: 07.07.1993
(51) Int. Cl.: A47J 31/00, G07F 13/06, G07F 7/02, A47J 31/40

(54) **Maschine zum Bezug von Getränken und Anordnung von mehreren Maschinen zu einem Getränkebezugsdispositiv**
Beverage dispensers and their arrangement
Distributeurs de boissons et leur combinaison

(30) Priorität: 17.07.1992 CH 2262/92
(43) Veröffentlichungstag der Anmeldung: 09.03.1994
(73) Patentinhaber: M. Schaerer AG, 3302 Moosseedorf (CH)
(72) Erfinder: Geissbühler, Niklaus, CH-3127 Mühlethurnen/BE (CH)
(74) Vertreter: Fischer, Franz Josef

(56) Entgegenhaltungen:
- EP-A- 0 081 606
- EP-A- 0 268 106
- EP-A- 0 360 613
- EP-A- 0 387 972
- WO-A-90/06565
- FR-A- 2 608 813
- PATENT ABSTRACTS OF JAPAN Bd. 015, Nr. 356 (P-1249) 09 September 1991 & JP-A-03 136 194 (MATSUSHITA REFRIG CO. LTD.) 10 Juni 1991

## Beschreibung

Die vorliegende Erfindung bezieht sich auf eine Maschine zum Bezug von Getränken, gemäss dem Oberbegriff des Patentanspruches 1 sowie auf eine Anordnung von mehreren Maschinen gemäss dem Oberbegriff des Patentanspruches 9.

Gattungsgleiche Maschinen, insbesondere Getränkeautomaten zum Bezug von Kaffee, Tee, Bouillon, etc., sind bereits bekannt. In solche Getränkeautomaten ist vom Getränkebezüger ein elektronischer Schlüssel einsteckbar, in welchem ein Speichermittel integriert ist. Nach dem Einstecken des Schlüssels werden die Getränkebezüge freigegeben, welche anhand eines Tastenfeldes auswählbar sind.

Ein jedem Getränk zugeordneter Betrag, welcher in einer Steuereinrichtung des Getränkeautomates gespeichert ist, wird bei jedem Getränkebezug von einem im Speichermittel des elektronischen Schlüssels gespeicherten Betrag in Abzug gebracht. Mittels einer Kassierstation kann, durch Eingabe eines bestimmten Geldbetrages, der im Speichermittel des elektronischen Schlüssels enthaltene Betrag wieder erhöht werden. Eine solche Maschine, die neben einer Vorrichtung für einen Münzeinwurf mit einem Kartenleser und anstelle des elektrischen Schlüssels zum Bezug von Getränken mit Chipkarten ausgerüstet ist, ist in der WO 90/06565 offenbart.

Im gleichen Dokument ist offenbart, dass mit entsprechend codierten Chipkarten auch Betriebsparameter der Getränkebezugsmaschine eingestellt werden können. Es wird dabei unterschieden zwischen Chipkarten, nach deren Einführung in den Kartenleser im wesentlichen eine maximale Anzahl von Bezügen einer Getränkeart mittels Bedienungstasten in die Maschine eingebbar und dort speicherbar ist, oder Chipkarten, die zusätzlich das Ändern von Betriebsparametern der Maschine wie Kaffeemenge pro Tasse, Wassermenge pro Tasse oder Temperatur, mittels der Bedienungstasten zulassen.

Im Dokument FR-A-2 608 813 ist eine Vorrichtung zum Ausgeben von Getränken, Fahrscheinen oder anderen Gegenständen offenbart, die mit codierten Datenträgern vom Anwender gesteuert ist. Ein käuflich zu erwerbender Datenträger ist zum Bezug von einer bestimmten Anzahl Gegenstände ab der Vorrichtung vorgesehen. Pro Bezug findet auf dem Datenträger eine Entwertung statt.

In der Zusammenfassung der japanischen Patentanmeldung JP-A-31 036 194 sind käuflich erwerbbare Datenträger, wie Magnetkarten, vorgesehen, die zum Bezug von Getränken, wie Kaffee, ab Getränkeautomaten bestimmt sind. Auf den Datenträgern können pro Anwender bestimmte Maschinenparameter programmiert werden, wobei der Getränkeautomat vorgängig zur Getränkeausgabe gemäss diesen Parametern automatisch eingestellt wird. Es kann beispielsweise die pro Tasse auszugebende Kaffeemenge benutzerspezifisch erfolgen.

Es ist die Aufgabe der vorliegenden Erfindung, den Einsatz von Daten-Schreib-Lese-Einrichtungen und Datenträgerorganen zum Eingeben von Daten an die Steuereinrichtung und zum Auslesen von Daten von der Steuereinrichtung von Getränkeautomaten, insbesondere von Kaffeemaschinen, zu erweitern und zu vereinfachen, so dass damit neben dem bekannten einfachen Erfassen und Abbuchen von Getränkebezügen auch das Abrechnen von Getränkebezügen, das Vorgeben von einer Anzahl Getränkebezügen, sowie das Überwachen, Ändern und Speichern von Betriebsparametern, gesteuert werden kann.

Diese Aufgabe wird mit einer Maschine zum Bezug von Getränken gelöst, die die im kennzeichnenden Teil des Patentanspruches 1 aufgeführten Merkmale aufweist. Die Anordnung von mehreren Maschinen zu einem Getränkedispositiv weist die im Kennzeichen des Patentanspruches 9 aufgeführten Merkmale auf.

Der Kartenleser und die zugeordneten Chipkarten mit je dem darauf angebrachten nicht flüchtigen Speichermittel stellen eine Vorrichtung zum Eingeben von Daten an die Steuereinrichtung und zum Auslesen von Daten von der Steuereinrichtung der erfindungsgemässen Kaffeemaschine dar. In jedem der Speichermittel der Datenträgerorgane, beispielsweise der genannten Chipkarten, sind neben Berechtigungs- und Identifikationsdaten weitere Daten enthalten, die zum Behandeln und/oder Abrechnen von Getränkebezügen und/oder zum Steuern und/oder Parametrisieren der Maschine bestimmt sind. Dadurch lassen sich die Anwendungsmöglichkeiten derartiger Vorrichtungen zum Eingeben und Auslesen von Daten an Getränkebezugsmaschinen, insbesondere an Kaffeemaschinen, wesentlich erweitern. Mit den Berechtigungs- und Identifikationsdaten kann zum Beispiel festgelegt werden, ob anhand eines Identifikationscodes mit einem bestimmten Datenträgerorgan generell eine Funktion an der Kaffeemaschine durchführbar sein soll oder nicht. Wenn ja, kann anhand der Berechtigungsdaten festgestellt werden, welche Maschinenfunktionen mit dem entsprechenden Datenträgerorgan ausgeführt werden dürfen. Maschinenfunktionen können beispielsweise den Bezug von Getränken darstellen, wobei im Datenträgerorgan festgelegt werden kann, ob eine Berechtigung zum Bezug aller möglichen Getränkearten oder nur einzelner Getränkearten gegeben ist. Andere Datenträgerorgane können dazu vorgesehen sein, um lediglich Daten mit der Steuereinrichtung der Kaffeemaschine im Sinne einer Datensicherung auszutauschen. Für den Besitzer der Kaffeemaschine, beispielsweise einen Gastwirt, ist es wünschenswert, wenn er periodisch Zähler, die in der Steuereinrichtung der Kaffeemaschine enthalten sind, auslesen kann, um die Anzahl Bezüge von jeder Getränkeart festzustellen. Dies kann beispielsweise dadurch erfolgen, dass anhand der Berechtigungsdaten die Steuereinrichtung der Maschine erkennt, dass sie jetzt einen Zählerstand nach dem anderen auf der Anzeigeeinheit der Maschine anzuzeigen hat. Mit den Berechtigungsdaten kann ebenfalls festgelegt werden, ob in diesem Falle der Wirt berechtigt ist, die Zählerstände auf Null zu setzen.

Im weiteren kann mit den Berechtigungsdaten bestimmt werden, ob Betriebsparameter der Kaffeemaschine geändert werden dürfen. Dies können beispielsweise Angaben zur Wasserdosierung oder zur Mahlmenge sein, die im Speichermittel der Steuereinrichtung gespeichert sind. Mit den Berechtigungsdaten kann zudem unterschieden werden, welche Betriebsparameter der Kaffeemaschine durch den Wirt und welche lediglich durch den Kundendienst geändert werden dürfen. Es ist ebenfalls denkbar, Maschineneinstellungen ab einer Servicestelle vorzunehmen, indem dem Wirt ein entsprechendes Datenträgerorgan zugesandt wird, das eine einmalige Aenderung von Betriebsparametern erlaubt. Dies könnte beispielsweise eine Aenderung des Anpressdruckes des Kolbens in der Brüheinrichtung, die Weite des Oeffnens des Kolbens nach dem Pressen oder ein Voreinspritzen von Wasser in die Brüheinrichtung betreffen. Eine weitere Anwendungsmöglichkeit ist darin zu sehen, dass dem Wirt periodisch ein Datenträgerorgan zugesandt wird, mit dem es möglich ist, alle im Speichermittel der Steuereinrichtung der Kaffeemaschine gespeicherten Betriebsparameter und Zählerstände auszulesen und im weiteren Speichermittel auf dem Datenträgerorgan abzuspeichern. Nach dem Zurücksenden der Karte an die Servicestelle kann auf diese Weise die Funktionstüchtigkeit der Maschine fernüberwacht werden. Eine Vereinfachung des Kundendienstes wird dadurch ermöglicht.

Es hat sich herausgestellt, dass vorteilhafterweise die Vorrichtung zum Eingeben und Auslesen von Daten derart ausgeführt ist, dass als Daten-Schreib-Lese-Einrichtung ein Kartenleser und als Datenträgerorgane Chipkarten, die vorzugsweise die Grösse der üblichen Kreditkarten aufweisen, verwendet werden. Auf jeder der Chipkarten ist ein elektronischer Baustein in Form eines nichtflüchtigen Speichermittels vorhanden.

Beim Einsatz der Kaffeemaschine in Gaststätten lassen sich Getränkebezüge dann einfach abrechnen, wenn jede Kellnerin oder jeder Kellner seine eigene Getränkebezugskarte hat. Die Getränkeabrechnung pro Kellnerin oder Kellner kann lediglich durch Auslesen der Tabelle erfolgen, wobei jeweils die Anzahl bezogener Getränke pro Getränkeart mit dem Getränkepreis zu multiplizieren sind. Das Auslesen der Tabelle kann an der Kaffeemaschine selbst durch vorheriges Einführen einer Chipkarte mit entsprechenden Berechtigungs- und Identifikationsdaten ausgeführt werden, oder es kann dazu ein spezielles Abrechnungsgerät vorgesehen sein. Die vorgenannte Multiplikation kann durch das in der Kaffeemaschine oder im Abrechnungsgerät enthaltene Rechenmittel ausgeführt werden.

Eine Getränkebezugskarte mit einem Preiszuteilungscode und einer weiteren Tabelle mit verschiedenen Preisen pro Getränkeart kann vorteilhaft in Kantinen eingesetzt werden. Es ist auf diese Weise möglich, dass zum Beispiel ein Lehrling für ein bestimmtes Getränk weniger bezahlt als Angestellte einer Firma. Diese Bezugskarten enthalten üblicherweise einen Betrag zum Bezug von Getränken, der laufend abgebucht wird. Ein Nachladen des Betrages ist, wie ganz am Anfang der Beschreibung erwähnt, möglich.

Es ist denkbar, dass nicht ein Wirt oder Kantinenbetreiber Eigentümer der Kaffeemaschine ist, sondern dass diese vom Kaffeelieferanten zur Verfügung gestellt wird. Der Kaffeelieferant hat dabei ein Interesse, nur seinen Kaffee zu liefern. Dies kann beispielsweise auf einfache Art dadurch überwacht werden, dass jeder Kaffeelieferung eine Bezugskarte beigelegt wird, auf welcher die Anzahl Kaffeebezüge gespeichert ist, welche mit der gelieferten Kaffeemenge erzielbar ist. Die Bezugskarte wird in den Kartenleser der Kaffeemaschine eingeschoben und die in deren Speichermittel gespeicherte Anzahl in das Speichermittel der Steuereinrichtung der Kaffeemaschine übertragen. Darin wird ein Zähler um diese Anzahl hochgesetzt. Bei jedem Kaffeebezug wird der Zähler um 1 dekrementiert. Beim zählerstand 0 ist kein Kaffeebezug mehr möglich. Eine entsprechende Vorwarnung kann auf die Anzeigeeinheit ausgegeben werden, wenn sich der Zählerstand dem Wert 0 nähert.

Betriebsparameter der Kaffeemaschine können entweder durch den Wirt oder durch den Kundendienst mit Chipkarten geändert werden. Im einen Fall kann eine Aenderung dieser Parameter nach dem Einstecken der Chipkarte in den Kartenleser mittels den Eingabetasten und der Anzeigeeinheit manuell erfolgen und im anderen Fall erfolgt eine Aenderung automatisch.

Eine Chipkarte kann ebenfalls eine Datensicherungskarte sein, wobei entweder die zu sichernden Daten ab der Steuereinrichtung der Kaffeemaschine an die Chipkarte übertragen werden können oder die auf der Chipkarte gesicherten Daten in das Speichermittel der Steuereinrichtung der Kaffeemaschine übergebbar sind.

Bei einer Anordnung von mehreren Kaffeemaschinen zu einem Getränkebezugsdispositiv, beispielsweise in grösseren Betrieben, ist es möglich, die verschiedenen Maschinen an beliebigen Stellen aufzustellen, ohne dabei auf bestehende oder zu ergänzende Datenverbindungsleitungen achten zu müssen, welche bis anhin notwendig waren, um die in jeder der Maschinen solcher Getränkebezugsdispositive gespeicherten Getränkebezüge zentral abrechnen zu können. Jeder Kellner kann mit seiner Bezugskarte an verschiedenen, vorbestimmten Kaffeemaschinen Getränke beziehen. Die Getränkeabrechnung ist mit der Chipkarte einfach, da diese an irgendeiner der Kaffeemaschinen, die dem Getränkebezugsdispositiv zugeordnet und dafür ausgerüstet ist, oder an einem Chipkartenverarbeitungsgerät oder Abrechnungsgerät eingeschoben und die Abrechnung vorgenommen werden kann.

Ein Getränkebezugsdispositiv mit den erfindungsgemässen Kaffeemaschinen ergibt unter anderem die folgenden Vorteile. Ohne das Einführen einer Chipkarte kann die Kaffeemaschine nicht betätigt werden. Es ist möglich, dass das Bedienungspersonal Getränke ab verschiedenen Maschinen beziehen kann. Die Abrechnung der Getränkebezüge kann an einer beliebigen Maschine oder an einem Abrechnungsgerät vorgenommen werden, ohne dass die Kaffeemaschinen dabei untereinander über eine Schnittstelle elektrisch verbunden sein müssen. Die Speicherkapazität des Speichermittels der Steuereinrichtung wird nicht durch Getränkebezugsdaten belastet. Es können fast beliebig viele Leute mit dem Kartensystem arbeiten. Der Chef kann jederzeit mit seiner Karte Getränke beziehen, ohne dass irgendwo eine Belastung erfolgt. Er kann aber auch eine Bedienungspersonalkarte benützen, um seine Bezüge für sich als Kontrolle zu registrieren.

Selbstverständlich können in das Getränkebezugsdispositiv auch andere Maschinen wie Getränkebezugsgeräte für Obstsäfte, Mineralwasser und/oder alkoholische Getränke (Biersäule) mit eingebunden sein. Voraussetzung ist, dass alle die im Dispositiv enthaltenen Geräte mit Kartenlesern ausgerüstet sind. Um die Bedienung weiter zu vereinfachen, kann vorgesehen werden, einzelne Geräte mit mehreren Kartenlesern auszurüsten, wobei je ein Kartenleser anstelle einer Bedienungstaste zum Bezug eines ganz bestimmten Getränkes bestimmt ist.

Mit der vorliegenden Erfindung sind die vielen unterschiedlichen Steuerungsfunktionen an der Kaffeemaschine, die hier nicht abschliessend aufgezählt sind, preisgünstig und einfach in der Anwendung realisierbar.

Die erfindungsgemässe Kaffeemaschine ist im folgenden anhand von Figuren beispielsweise näher erläutert. Es zeigen
- **Fig. 1**: eine Frontansicht eines Ausführungsbeispieles der erfindungsgemässen Kaffeemaschine,
- **Fig. 2**: einen Kartenleser und eine Chipkarte,
- **Fig. 3**: wie Fig. 2, wobei der Kartenleser im geöffneten Zustand gezeigt ist,
- **Fig. 4**: ein Blockschaltbild der elektronischen Steuerung der Kaffeemaschine gemäss der Fig. 1, und
- **Fig. 5**: eine Anordnung von mehreren Kaffeemaschinen und weiteren Geräten zu einem Getränkebezugsdispositiv.

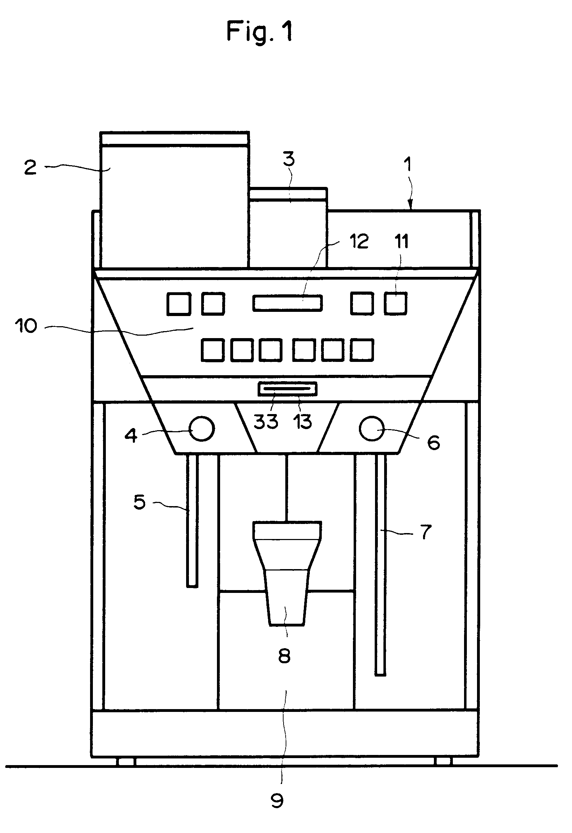

In der Fig. 1 ist mit dem Bezugszeichen 1 die erfindungsgemässe Kaffeemaschine gekennzeichnet. Mit 2 ist ein Kaffeebehälter dargestellt, 3 kennzeichnet ein Mahlwerk, 4 einen Heisswasserhahn zum Bezug von Heisswasser von einem Heisswasserauslauf 5. Mit 6 ist ein Dampfhahn bezeichnet, nach dessen Betätigung Dampf von einem Dampfauslauf 7 bezogen werden kann. Unter einen Kaffeeauslauf 8 sind Tassen unterschiedlicher Grösse zum Bezug von verschiedenen Kaffeearten, welche mit den Bedienungstasten 11 ausgewählt werden können, stellbar. Mehrere Bedienungstasten 11 sind zusammen mit einer Anzeigeeinheit 12, vorzugsweise einen LCD-Display, auf einem Bedienungspaneel 10 angeordnet. Das letztere weist im weiteren eine Daten-Schreib-Lese-Einrichtung 13, vorzugsweise ein Kartenleser, auf. Dieser besitzt eine Einführöffnung 33 für ein Datenträgerorgan, vorzugsweise eine Chipkarte. Erst nach dem Einführen der entsprechenden Chipkarte in den Kartenleser 13 können mit den Bedienungstasten 11 bestimmte Maschinenfunktionen, beispielsweise wie vorgängig beschrieben, ausgeführt werden.

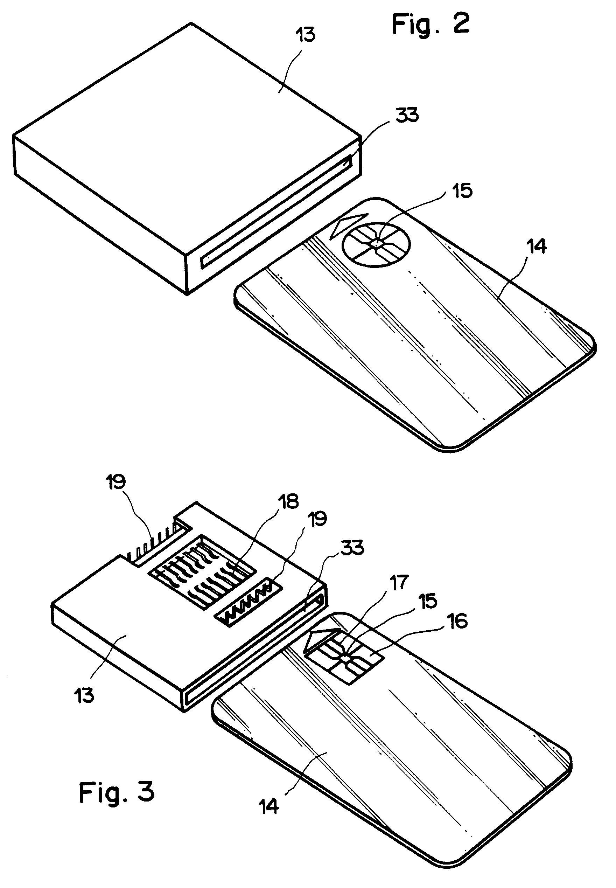

In den Fig. 2 und 3 sind der Kartenleser 13 und eine Chipkarte 14 dargestellt. In der Fig. 2 ist der Kartenleser 13 von einem Gehäuse umschlossen. Die Einführungsöffnung 33 ist der Chipkarte 14 zugewandt, die neben dem Kartenleser 13 gelegen gezeigt ist. Auf der Chipkarte 14 ist ein Elektronikbauteil angeordnet, welcher mindestens ein Speichermittel 15 umfasst. Ueblicherweise ist das Speichermittel als EEPROM ausgeführt. Dies ist ein nichtflüchtiger Halbleiterspeicher, der elektrisch schreibbar und löschbar ist.

Der Kartenleser 13, mit entferntem Gehäuse, ist aus der Fig. 3 ersichtlich. Im Kartenleser sind im wesentlichen zwei Reihen Abtastkontakte 18 enthalten, welche zu je einem Verbindungsanschluss 19 geführt sind und von dort über ein Verbindungskabel mit einer Steuerelektronik verbindbar sind.

Der Elektronikbauteil auf der Chipkarte, mit dem Speichermittel 15, ist mit einem metallisierten Kontaktfeld 16 abgedeckt. Die metallisierte Fläche ist durch einzelne Isolationsbahnen 17 derart in Teilflächen aufgeteilt, dass bei in die Einführungsöffnung 33 des Kartenlesers 13 eingeführter Chipkarte 14, je ein Abtastkontakt je einer Teilfläche zugeordnet ist. Ein Abtastvorgang wird erst freigegeben, wenn ein im Kartenleser vorhandener Endlagenkontakt, der in den Figuren nicht sichtbar ist, das vollständige Einschieben der Chipkarte meldet.

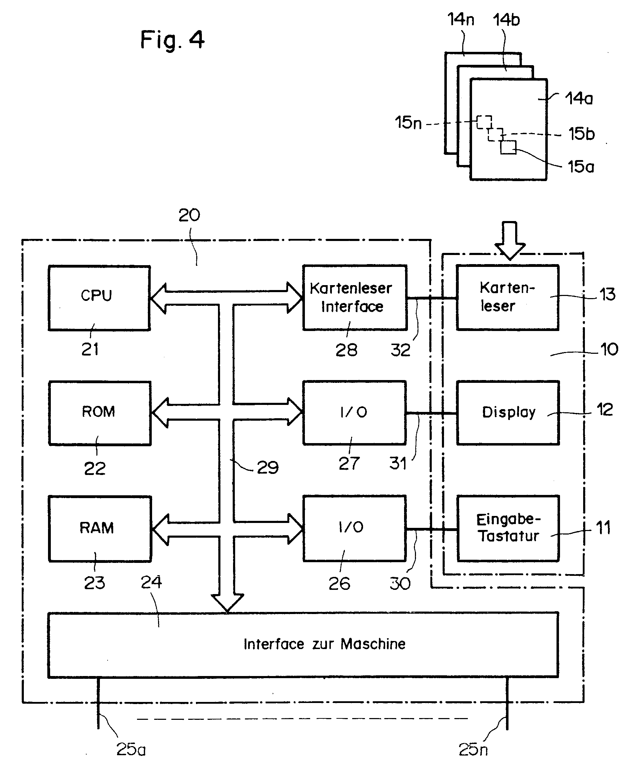

Das Blockschaltbild einer elektronischen Steuerung, wie sie für die erfindungsgemässe Maschine beispielsweise verwendet wird, ist in der Fig. 4 dargestellt. Die elektronische Steuerung umfasst das Bedienungspaneel 10, eine Steuereinrichtung 20 und mehrere Chipkarten 14a, 14b bis 14n. Mit n soll dabei zum Ausdruck gebracht werden, dass die Anzahl der Chipkarten nicht auf einen bestimmten Wert festgelegt, sondern dem jeweiligen Bedürfnis angepasst ist. Auf jeder der Chipkarten 14a bis 14n ist je ein weiteres Speichermittel 15a bis 15n enthalten.

Die Steuereinrichtung 20 umfasst ein Rechenmittel 21 in der Form eines Mikroprozessors, Speichermittel 22, 23, welche in einen ROM-Speicher 22, in welchem der Programmcode zum Betrieb des Rechenmittels gespeichert ist und in einen RAM-Speicher 23 aufgeteilt ist. Im letzteren ist mindestens ein nichtflüchtiger, batteriegepufferter Bereich vorhanden, in welchem die vorgenannten Zähler und Speicherstellen unter anderem für die beschriebenen Betriebsparameter der Maschine enthalten sind.

Mit 24 ist ein Maschineninterface bezeichnet, in welchem elektronische Anpass-Stromkreise enthalten sind, die zum Ansteuern von elektro-mechanischen Komponenten der Kaffeemaschine bestimmt sind oder die zum Umwandeln von Signalen vorgesehen sind, die von Sensoren, die in der Kaffeemaschine enthalten sind, erhalten werden, so dass diese Signale vom Rechenmittel 21 gelesen und weiterverarbeitet werden können. Die elektromechanischen Komponenten und die Sensoren der Kaffeemaschine sind über eine bestimmte Anzahl elektrischer Leitungen 25a bis 25n mit dem Maschineninterface 24 verbunden.

Die Eingabetastatur 11 und die Anzeigeeinheit 12, welche auf dem Bedienungspaneel 10 angeordnet sind, sind ebenfalls je über eine Anzahl elektrischer Leitungen, die mit 30 und 31 bezeichnet sind, mit je einem Eingabe/Ausgabe-Stromkreis 26, 27 verbunden. Ein Verbindungskabel 32 verbindet den Verbindungsanschluss 19 des Kartenlesers 13 mit einem Kartenleserinterface 28, welches, wie die vorgenannten Eingabe/Ausgabe-Stromkreise 26, 27, in der Steuereinrichtung 20 angeordnet ist. Auf dem Kartenleserinterface sind elektronische Stromkreise enthalten, mit welchen das Lesen und Schreiben der weiteren Speichermittel 15a bis 15n auf den einzelnen Chipkarten 14a bis 14n ermöglicht wird. Mit 29 sind Busverbindungen dargestellt, mit welchen die vorgenannten Bausteine 21, 22, 23, 24, 26, 27 und 28 der Steuereinrichtung 20 miteinander verbunden sind. Wie in der Mikroprozessortechnik üblich, sind die Busverbindungen in einen aus der Figur nicht sichtbaren Adressen-, Daten- und Steuerbus aufgeteilt.

Selbstverständlich ist es möglich, anstelle der hier beschriebenen Vorrichtung zum Ein- und Auslesen von Daten, Kartenleser und Chipkarten, andere dazu geeignete Vorrichtungen zu verwenden, wenn diese einfach in der Handhabung und preisgünstig sind.

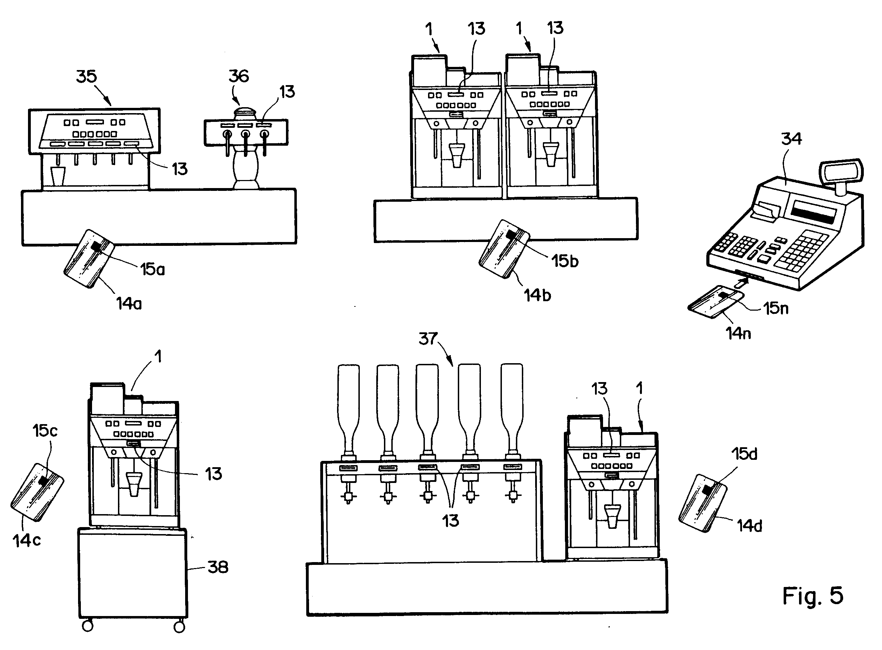

Die Fig. 5 zeigt ein Getränkebezugsdispositiv. Mehrere Kaffeemaschinen 1 je mit ihrem zugehörigen Kartenleser 13 sind darin enthalten. Im weiteren ist im Getränkebezugsdispositiv ein Getränkebezugsgerät 35 mit mehreren Chipkartenlesern 13 gezeigt, welches beispielsweise zum Bezug von Obstsäften, Mineralwasser usw. verwendet werden kann. Zur einfachen Bedienung dieses Gerätes ist jeder Getränkeart ein Kartenleser 13 zugeordnet. Ein Getränkebezüger braucht seine Chipkarte lediglich in den dem gewünschten Getränk zugeordneten Kartenleser einzuschieben, um dieses Getränk zu beziehen. Eine zusätzliche Tastenbedienung ist nicht mehr erforderlich.

Mit 36 ist eine Biersäule gezeigt, wobei auch an dieser Biersäule für jeden Getränkeauslass ein eigener Kartenleser 13 vorhanden ist. Die Bedienung erfolgt wie beim vorgenannten Getränkebezugsgerät 35 analog mit einer der Chipkarten 14a bis 14n.

Ein Spirituosenspendegerät ist mit dem Bezugszeichen 37 gekennzeichnet. Es umfasst mehrere am Spendegerät angeordnete Flaschen, in welchen üblicherweise alkoholische Getränke enthalten sind. Jeder Flasche ist eine Getränkespendevorrichtung und ein Kartenleser 13 zugeordnet. Es ist vorgesehen, dass beim Einschieben einer der Chipkarten 14a bis 14n in den entsprechenden Kartenleser 13 von der damit selektierten Flasche eine bestimmte Menge ihres Inhaltes entnommen werden kann.

Alle die getätigten Getränkebezüge werden auf den entsprechenden Bezugskarten 14a bis 14n auf dem darauf angeordneten nicht flüchtigen Speichermittel 15a - 15n festgehalten. Ein Identifikationscode oder Berechtigungscode in jedem nicht flüchtigen Speichermittel legt fest, mit welchen Chipkarten an welchen Getränkebezugsgeräten oder Kaffeemaschinen Getränke bezogen werden können. Die Getränkeabrechnung erfolgt im gezeigten Ausführungsbeispiel an einem Chipkartenverarbeitungsgerät, hier einer Kasse 34, indem die Chipkarte 14a bis 14n mit den abzurechnenden Getränken in den Kartenleser der Kasse eingeschoben wird. Mit einer bestimmten Abrechnungsfunktion werden die im Speichermittel der Chipkarte enthaltenen Getränkebezüge abgerechnet. Die Getränkebezugszähler auf der Chipkarte werden dabei auf null zurückgesetzt.

Es fällt auf, dass die vorliegende Anordnung keine Datenleitungen benötigt, mit denen die einzelnen Kaffeemaschinen oder anderen Geräte untereinander verbunden sind. Der Datenaustausch, der für die Getränkebezugsabrechnung in einem solchen Dispositiv erforderlich ist, erfolgt vollumfänglich mittels den Chipkarten. Dadurch ist das Getränkebezugsdispositiv sehr flexibel im Aufstellen der verschiedenen Geräte an einzelnen Stellen in Bezug auf Erweiterungen oder Umstellungen. Es muss auf keine vorhandene Datenübertragungsleitung geachtet werden und es müssen auch nicht Erweiterungen an bestehenden Verkabelungen vorgenommen werden. Es ist sogar möglich, dass einzelne Kaffemaschinen oder auch andere Geräte auf einem fahrbaren Untersatz 38 mobil ausgeführt sein können.

Das Getränkebezugsdispositiv liesse sich auch mit anderen Geräten, die nicht zum Bezug von Getränken sondern eventuell zum Bezug von Speisen konzipiert sind, erweitern.

## Patentansprüche

1. Maschine zum Bezug von Getränken, insbesondere Kaffeemaschine (1) mit Mitteln (5, 7, 8) zum Bezug von mindestens einer Getränkeart, mit einer Steuereinrichtung (20), welche mindestens ein Rechenmittel (21) und ein Speichermittel (22, 23) umfasst, mit einer Anzahl Bedienungstasten (11) sowie einer Anzeigeeinheit (12), mit einem Kartenleser (13) und mehreren Datenträgerkarten (14a bis 14n), auf welchen je ein nicht flüchtiges weiteres Speichermittel (15a bis 15n) enthalten ist und welche mit dem Kartenleser (13) in eine einen Datenaustausch erlaubende Verbindung bringbar und zum Ausführen von auf der entsprechenden Datenträgerkarte (14a bis 14n) gespeicherten, vorbestimmten Maschinenfunktionen berechtigt sind, wobei in den weiteren Speichermitteln (15a bis 15n) Berechtigungs- und Identifikationsdaten enthalten sind, mit welchen festgelegt ist, welche Maschinenfunktionen mit der entsprechenden Datenträgerkarte durchführbar sind, dadurch gekennzeichnet, dass zumindest auf einem ersten Teil der Datenträgerkarten weitere Daten zum Erfassen von Getränkebezügen enthalten sind, wobei diese Datenträgerkarten im weiteren Speichermittel (15) eine Tabelle enthalten, in welcher die Getränkearten, die Getränkepreise sowie die Anzahl bezogener Getränke pro Getränkeart ab einem Ausgangszeitpunkt überschreibbar eingespeichert sind und mit Mitteln fur Erstellung einer Abrechnungstabelle.

2. Maschine nach Anspruch 1, dadurch gekennzeichnet dass die Tabelle des ersten Teiles der Datenträgerkarte (14a bis 14n) anstelle des Getränkepreises einen Preiszuteilungscode enthält und verschiedene Preise pro Getränkeart in einer weiteren Tabelle, einer Preistabelle, enthalten sind und wobei vor jedem Bezug der entsprechende Getränkepreis ab einem ebenfalls auf dem ersten Teil der Datenträgerkarten enthaltenen Betrag abbuchbar ist.

3. Maschine nach Anspruch 1 oder 2, dadurch gekennzeichnet, dass die Steuereinrichtung (20) Rechenmittel (21, 22) aufweist, womit eine Bezugs- oder Kostenabrechnung für die ab einem Ausgangszeitpunkt auf einer des ersten Teiles der Datenträgerkarten gespeicherten Anzahl bezogenen Getränke durchführbar ist.

4. Maschine nach einem der Ansprüche 1 bis 3, dadurch gekennzeichnet, dass jede Lieferung eines Getränkebasismaterials eine der Datenträgerkarten umfasst, auf welcher im weiteren Speichermittel (15) eine der Menge der erhaltenen Lieferung entsprechende Anzahl Bezüge der entsprechenden Getränkeart gespeichert ist, wobei die genannte Anzahl beim Lesen der Datenträgerkarte dem Speichermittel (23) der Steuereinrichtung (20) übergeben und im weiteren Speichermittel gelöscht wird.

5. Maschine nach einem der Ansprüche 1 bis 3, dadurch gekennzeichnet, dass mindestens eine der Datenträgerkarten (14a - 14n) in den weiteren Speichermitteln (15a bis 15n) weitere Daten zum Bearbeiten von Maschinenfunktionen enthält, welche Daten mindestens ein Codewort enthalten, nach dessen Lesung und Anerkennung den Bedienungstasten und der Anzeigeeinheit Funktionen zum Ändern von Betriebsparametern der Maschine zuweisbar sind.

6. Maschine nach einem der Ansprüche 1 bis 3, dadurch gekennzeichnet, dass mindestens eine der Datenträgerkarten eine von einer Servicestelle dem Maschinenbetreiber periodisch zustellbare Karte ist, mit welcher von der Servicestelle in die weiteren Speichermittel (15) übergebene Betriebsparameter für die Maschine einmalig an die Steuereinrichtung der letzteren übergebbar sind.

7. Maschine nach einem der Ansprüche 1 bis 3, dadurch gekennzeichnet, dass mindestens eine der Datenträgerkarten eine von einer Servicestelle dem Maschinenbetreiber periodisch zustellbare Karte ist, wobei nach deren Einführen in den Kartenleser (13) entweder alle im Speichermittel (23) der Steuereinrichtung (20) enthaltenen Betriebsparameter und Zählerstände auf die Datenträgerkarte übertragbar sind oder alle auf der Datenträgerkarte enthaltenen obengenannten Daten in das Speichermittel (23) der Steuereinrichtung (20) übergebbar sind.

8. Maschine nach einem der Ansprüche 1 bis 7, dadurch gekennzeichnet, dass zumindest auf einem anderen Teil der Datenträgerkarten Vorgabedaten zum Bezug einer maximalen Anzahl Getränke oder Betriebsparameter der Maschine gespeichert sind.

9. Anordnung von mehreren Maschinen nach einem der Ansprüche 1 bis 8 zu einem Getränkebezugsdispositiv, wobei die Maschinen an verschiedenen Orten aufgestellt sind, dadurch gekennzeichnet, dass keine Verbindungsleitungen zum Durchführen eines Datenaustausches zwischen den Maschinen vorhanden sind, und dass die Getränkeabrechnung mit den Datenträgerkarten erfolgt.

10. Anordnung nach Anspruch 9, dadurch gekennzeichnet, dass mit einer Datenträgerkarte vom ersten Teil der genannten Datenträgerkarte von all denjenigen Maschinen Getränke bezogen werden können, in deren Speichermittel (23) der Identifikationscode der entsprechenden Datenträgerkarte ebenfalls gespeichert ist.

11. Anordnung nach Anspruch 9 oder 10, dadurch gekennzeichnet, dass ein Datenträgerkarteverarbeitungsgerät (34) vorhanden ist, welches zum Auslesen, Rücksetzen und/oder Abrechnen der auf dem ersten Teil der Datenträgerkarte gespeicherten Daten bestimmt ist.

12. Anordnung nach einem der Ansprüche 9 bis 11, dadurch gekennzeichnet, dass in der Anordnung Geräte (35, 36) mit Kartenlesern (13) vorhanden sind, von denen weitere Getränkearten wie Obstsäfte, Mineralwasserarten und/oder alkoholische Getränke mit den genannten Datenträgerkarte (14a bis 14n) beziehbar sind.

13. Anordnung nach einem der Ansprüche 9 bis 12, dadurch gekennzeichnet, dass zumindest ein Teil der Maschinen (1) oder der Geräte (35, 36) mit mehreren Kartenlesern (13) ausgerüstet sind, wobei jeder Kartenleser zum Bezug eines ganz bestimmten Getränkes der Maschine (1) oder des Gerätes (35, 36) bestimmt ist.

## Claims

1. Machine for dispensing beverages, in particular a coffee machine (1), with means (5, 7, 8) for dispensing at least one kind of beverage, with a control device (20), which comprises at least one calculating means (21) and one memory means (22, 23), with a number of control keys (11) and a display unit (12), with a card reader (13) and a plurality of data carrier cards (14a to 14n), on each of which a non-volatile further memory means (15a to 15n) is contained and which, together with the card reader (13), can be brought into a connection allowing data exchange and which are authorised to carry out predetermined machine functions stored on the respective data carrier card (14a to 14n), authorisation and identification data being contained in the further memory means (15a to 15n), with which it is determined which machine functions are executable with the respective data carrier card, characterised in that further data for recording dispensed beverages are contained on at least a first part of the data carrier cards, these data carrier cards containing a table in the further memory means (15), in which table the types of beverages, the prices of beverages and the number of beverages dispensed per beverage type from a starting time are recorded in a way which can be overwritten and with means for drawing up an accounting table.

2. Machine according to claim 1, characterised in that the table of the first part of the data carrier cards (14a to 14n) contains, instead of the beverage prices, a price assignment code and various prices per beverage type are contained in a further table, a price table, and prior to each dispensing, the corresponding beverage price can be deducted from an amount, likewise contained on the first part of the data carrier cards.

3. Machine according to claim 1 or 2, characterised in that the control device (20) has calculating means (21, 22) with which a dispensing accounting or a cost accounting can be carried out, from a starting time, for a number of dispensed beverages, the number being stored on the first part of the data carrier cards.

4. Machine according to one of the claims 1 to 3, characterised in that one of the data carrier cards covers each supply of a beverage base material, on which card a number of dispensed drinks of the respective beverage type corresponding to the quantity of the supply received is stored in the further memory means (15), said number being transmitted to the memory means (23) of the control device (20) upon reading of the data carrier card and being erased in the further memory means.

5. Machine according to one of the claims 1 to 3, characterised in that at least one of the data carrier cards (14a - 14n) contains, in the further memory means (15a to 15n), further data for processing of machine functions which data include at least one code word, after the reading and recognition of which, functions to change the operating parameters of the machine can be assigned to the control keys and to the display unit.

6. Machine according to one of the claims 1 to 3, characterised in that at least one of the data carrier cards is a card which can be sent periodically to the machine operator from a service centre, with which card operating parameters for the machine, transferred from the service centre into the further memory means (15), can be transferred a single time to the control unit of the machine.

7. Machine according to one of the claims 1 to 3, characterised in that at least one of the data carrier cards is a card which can be sent periodically to the machine operator from a service centre, after the insertion of which card in the card reader (13), either all the operating parameters and counter readings contained in the memory means (23) of the control device (20) can be transferred to the data carrier card, or all the aforementioned data contained on the data carrier card can be transferred to the memory means (23) of the control device (20).

8. Machine according to one of the claims 1 to 7, characterised in that at least on one other part of the data carrier cards, pre-specified data are stored for dispensing a maximal number of beverages or operational parameters of the machine.

9. Arrangement of a plurality of machines according to one of the claims 1 to 8 to form a beverage dispensing configuration, the machines being set up at various places, characterised in that there are no connecting lines for carrying out an exchange of data between the machines, and in that the beverage accounting takes place with the data carrier cards.

10. Arrangement according to claim 9, characterised in that with a data carrier card, from the first part of said data carrier card, beverages can be dispensed from all those machines in whose memory means (23) the identification code of the respective data carrier card is likewise stored.

11. Arrangement according to claim 9 or 10, characterised in that there is a data carrier card processing device (34), which is intended for reading, resetting and/or accounting of the data stored on the first part of the data carrier card.

12. Arrangement according to one of the claims 9 to 11, characterised in that in the arrangement there are appliances (35, 36) with card readers (13), from which further types of beverages, such as fruit juices, types of mineral water and/or alcoholic drinks, can be dispensed with said data carrier cards (14a to 14n).

13. Arrangement according to one of the claims 9 to 12, characterised in that at least part of the machines (1) or of the appliances (35, 36) are equipped with a plurality of card readers (13), each card reader being intended for the dispensing of a very particular beverage from the machine (1) or from the appliance (35, 36).

## Revendications

1. Distributeur de boissons, en particulier machine à café (1), pourvu de moyens (5, 7, 8) permettant aux utilisateurs de prélever au moins une sorte de boisson, avec un dispositif de commande (20) comprenant au moins un moyen de calcul (21) et un support de mémoire (22, 23), avec un certain nombre de touches de commande (11) et une unité d'affichage (12), un lecteur de cartes (13) et plusieurs cartes à support de données (14a à 14n) comportant chacune un autre support de mémoire non volatil (15a à 15n), qui peuvent être mises en liaison avec le lecteur de cartes (13) d'une manière permettant l'échange de données et auxquelles est conférée la possibilité d'exécuter des fonctions du distributeur déterminées et enregistrées sur la carte à support de données correspondante (14a à 14n), les autres supports de mémoire (15a à 15n) contenant des données d'autorisation et d'identification au moyen desquelles sont fixées les fonctions du distributeur qui peuvent être exécutées avec la carte à support de données considérée, caractérisé en ce que d'autres données servant à saisir les prélèvements de boissons se trouvent au moins sur une première partie des cartes à support de données, celles-ci contenant, dans l'autre support de mémoire (15), un tableau dans lequel sont enregistrés, d'une façon permettant de les changer, les sortes de boissons, les prix des boissons ainsi que le nombre de doses de boissons prélevées, pour chaque sorte de boissons, à partir d'un instant initial, et étant pourvues de moyens servant à la réalisation d'un tableau de décompte

2. Distributeur selon la revendication 1, caractérisé en ce que le tableau de la première partie des cartes à support de données (14a à 14n) contient, au lieu du prix de la boisson, un code d'attribution de prix, et en ce que différents prix pour chaque sorte de boisson sont contenus dans un autre tableau, un tableau des prix, le prix correspondant à la boisson pouvant être déduit, avant chaque prélèvement, d'une somme qui est elle aussi contenue dans la première partie des cartes à support de données.

3. Distributeur selon la revendication 1 ou 2, caractérisé en ce que le dispositif de commande (20) possède des moyens de calcul (21, 22) permettant d'effectuer des calculs de prélèvements ou de frais pour le nombre, enregistré à partir d'un instant initial sur la première partie des cartes à support de données, de boissons prélevées.

4. Distributeur selon l'une des revendications 1 à 3, caractérisé en ce que chaque fourniture d'un produit de base pour boisson englobe l'une des cartes à support de données, sur laquelle est enregistré, dans l'autre support de mémoire (15), un nombre de prélèvements de la sorte de boisson correspondant à la quantité de la livraison reçue, le nombre indiqué étant transmis au support de mémoire (23) du dispositif de commande (20) lors de la lecture de la carte à support de données, et effacé dans l'autre support de mémoire.

5. Distributeur selon l'une des revendications 1 à 3, caractérisé en ce qu'au moins l'une des cartes à support de données (14a à 14 n) contient, dans les autres supports de mémoire (15a à 15n), d'autres données destinées à traiter des fonctions du distributeur, ces données contenant au moins un motcode après la lecture et la reconnaissance duquel des fonctions de modification de paramètres de fonctionnement du distributeur peuvent être attribuées aux touches de commande et à l'unité d'affichage.

6. Distributeur selon l'une des revendications 1 à 3, caractérisé en ce qu'au moins l'une des cartes à support de données est une carte pouvant être remise périodiquement à l'exploitant du distributeur par un organisme de service après-vente, carte au moyen de laquelle les paramètres de fonctionnement du distributeur que l'organisme de service après-vente a introduits dans les autres supports de mémoire (15) peuvent être transmis une seule fois au dispositif de commande dudit distributeur.

7. Distributeur selon l'une des revendications 1 à 3, caractérisé en ce qu'au moins l'une des cartes à support de données est une carte qu'un organisme de service après-vente peut remettre périodiquement à l'exploitant du distributeur; après l'introduction de cette carte dans le lecteur de cartes (13), soit tous les paramètres de fonctionnement et positions du compteur contenus dans le support de mémoire (23) du dispositif de commande (20) peuvent être reportés sur la carte à support de données, soit toutes les données précitées, contenues dans la carte à support de données, peuvent être reportées dans le support de mémoire (23) du dispositif de commande (20).

8. Distributeur selon l'une des revendications 1 à 7, caractérisé en ce que des données imposées relatives au prélèvement d'un nombre maximal de boissons ou bien des paramètres de fonctionnement du distributeur sont stockés au moins dans une autre partie des cartes à support de données.

9. Combinaison de plusieurs distributeurs conformes à l'une des revendications 1 à 8, donnant un ensemble distributeur de boissons, les distributeurs étant installés à différents endroits, caractérisée en ce qu'il n'y a pas de câbles de liaison destinés à l'échange de données entre les distributeurs et en ce que l'imputation des boissons se fait au moyen des cartes à support de données.

10. Combinaison selon la revendication 9, caractérisée en ce que la première partie d'une carte à support de données permet de prélever des boissons dans tous les distributeurs dont le support de mémoire (23) contient également le code d'identification de la carte à support de données correspondante.

11. Combinaison selon la revendication 9 ou 10, caractérisée en ce qu'elle possède un dispositif (34) de traitement des cartes à support de données, destiné à la lecture ainsi qu'au retour en arrière ou à l'imputation, ou au deux, des données stockées dans la première partie de la carte à support de données.

12. Combinaison selon l'une des revendications 9 à 11, caractérisée en ce qu'elle contient des appareils (35, 36) équipés de lecteurs de cartes (13) permettant de prélever d'autres sortes de boissons telles que des jus de fruits, des eaux minérales ou des boissons alcoolisées, ou les unes et les autres, avec les cartes à support de données mentionnées (14a à 14n).

13. Combinaison selon l'une des revendications 9 à 12, caractérisée en ce qu'au moins une partie des distributeurs (1) ou des appareils (35, 36) sont équipés de plusieurs lecteurs de cartes (13), chacun de ceux-ci étant destiné au prélèvement d'une boisson bien déterminée du distributeur (1) ou de l'appareil (35, 36).
